# EUROPEAN PATENT SPECIFICATION

(11) **EP 4 479 297 B1**
(45) Date of publication and mention of the grant of the patent: **03.12.2025**
(21) Application number: 23712573.7
(22) Date of filing: 17.02.2023
(51) Int. Cl.: B62K 19/34, B62K 25/28, B62K 25/26, B62M 9/10

(54) **BICYCLE FRAME**
FAHRRADRAHMEN
CADRE DE BICYCLETTE

(30) Priority: 17.02.2022 GB 202202119
(43) Date of publication of application: 25.12.2024
(73) Proprietor: Inspiral Cycles Limited, Bishop Auckland DL14 7EN (GB)
(72) Inventor: EWING, Gary, Bishop Auckland DL14 7EN (GB)
(74) Representative: Archer, Graham John
(86) International application number: PCT/GB2023/050365
(87) International publication number: WO 2023/156788

(56) References cited:
- WO-A1-2020/107055
- FR-A1- 2 774 966
- FR-A3- 2 803 576

## Description

The present invention relates to a frame for a bicycle and relates particularly, but not exclusively to a frame for a rear suspension mountain bicycle.

Rear suspension mountain bikes come with many design layouts each design providing different advantages and disadvantages to the rider. Most designs aim to provide a solution to the ideal rear axle path by minimising or compromising rear suspension complications. Measuring the rear axle path is achieved by following the direction of the rear axle as the bicycle transverses over uneven ground and the suspension is activated.

Examples of the complications that arise from attempting to produce the ideal rear axle path include pedal kickback and pedal bob.

Pedal-kickback is a result of chain growth rotating the cranks backwards during suspension compression. Chain growth is the increase in the length of the chain line which is measured from the points at which the chain contacts the front and rear cogs in the drivetrain. On a rear suspension bike the front or main frame is able to move or pivot relative to the rear frame portion. When the front cog is attached to the main frame portion (via the bottom bracket) and the rear cog-set is attached to the rear frame portion, the distance between the front and rear cogs changes which in turn alters the length of the chain line. It is when the chain line grows significantly due to rearward movement of the rear axle, that excessive pedal-kickback can occur.

Pedal bob is initiated when the pedalling forces from the rider cause the rear suspension to 'bob' up and down. This can be caused both by the movement of the rider and by the forces exerted by the rider on the drivetrain. Pedal bob wastes the energy of the rider by compressing the suspension instead of driving the bike forwards.

Examples of the prior art are disclosed in the patent applications published under the numbers EP2420435 and WO2013/126968. Both documents disclose examples of the use of high idler mechanisms in rear suspension mountain bikes. Further examples of the prior art are disclosed in the patent applications published under the following numbers: FR 2774966; FR2803576; and WO2020/107055.

Document FR2774966A1 shows the preamble of claim 1.

Preferred embodiments of the present invention seek to overcome or alleviate the above described disadvantages of the prior art.

According to an aspect of the present invention there is provided a frame for a bicycle as set out in claim 1.

Having two counter-rotating linkages relative to the rear frame portion creates an instantaneous centre of rotation (virtual pivot) which is rearward of the bottom bracket. This is the pivot point that the rear axle is rotating around at any given instant during the action of the suspension, providing a very curved rearward axle path. This process causes the rear wheel to move predominantly backwards during the first part of suspension compression and more vertically during the second part of suspension compression. This is particularly advantageous as the distance between the rear wheel and the front wheel does not continue to lengthen during the second half of the compression, allowing the rider to control the bike more effectively.

Furthermore, having an element of the drivetrain, for example the idler or the bottom bracket, mounted on the second linkage provides additional advantages. The position of the idler on the second linkage allows for control of chain growth in a way that is most desirable for rider. During the first part of the suspension (rearward axle arc path, when the rear axle moves further from the bottom bracket) the idler allows for a small amount of the chain growth to counteract pedal bob during increased pedalling but decreases the amount of chain growth during the second half of the compression (vertical axle arc path) increasing the ability for the rear suspension to absorb bumps during less pedalling activity and reduces pedal kickback. Furthermore, this location enables the chain to move over the idler along a smoother angle range therefore decreasing distortion and tension experienced by the chain. The chain line is comparatively undistorted compared to other high-pivot designs, as the position of the idler pulley wheel does not pull the chain to an acute angle.

Having the bottom bracket located on the second linkage also reduces complications caused by pedal kickback and pedal bob by enabling the rear axle to move rearwards during the first half of the suspension compression and vertically during the second half of the suspension compression.

In a preferred embodiment the mounting further comprises at least one idler mounting for receiving an idler.

In another preferred embodiment the idler mounting is moveable.

In another preferred embodiment the idler mounting further comprises an aperture for receiving an axle of said idler.

By allowing a single idler moveable or multiple possible locations for the idler within the linkage, the rider can adjust the idler and create the ideal balance between suspension performance and pedalling efficiency, according to the terrain and the rider.

In a preferred embodiment the second linkage is located below said first linkage.

The lower of the two linkages is the more effective place to locate the drivetrain element.

In a further preferred embodiment the mounting further comprises an aperture for receiving a bottom bracket.

In an additional preferred embodiment first and second location are at opposing ends of said first linkage and the third and fourth location are at opposing ends of the second linkage.

In another preferred embodiment the mounting allows the drivetrain component to be mounted to said second linkage at a plurality of locations.

In a further preferred embodiment the mounting comprises multiple mountings.

In an additional preferred embodiment the shock absorber has one shock absorber mount located at the first location and another shock absorber mount is located on the main frame mount.

In another preferred embodiment the shock absorber mount is located at a fifth location and another shock absorber mount is located on the main frame mount wherein, the fifth location is on said first linkage distal of said first location.

The rotation of the first and second linkages is preferably exclusively in said second rotational direction.

According to another aspect of the present invention there is provided a bicycle comprising:
a frame according to any preceding claim;
a shock absorber;
a pair of wheels; and
a drivetrain.

In a preferred embodiment the drivetrain further comprises a plurality of gears.

In another preferred embodiment the drivetrain comprises an idler pulley and a chain.

In a further preferred embodiment the drivetrain comprises a bottom bracket mounted to the second linkage.

In an additional preferred embodiment the bicycle further comprises a crank assembly connected to the bottom bracket. Preferred embodiments of the present invention will now be described, by way of example only, and not in any limitative sense with reference to the accompanying drawings in which:-
Figure 1 is a schematic representation of a bicycle including a frame of a first embodiment of the present invention;
Figure 2 is a schematic representation of a bicycle including a frame of a second embodiment of the present invention;
Figures 3 and 4 are a pair of schematic representations of the bicycle of figure 1 in use;
Figures 5 and 6 are a pair of schematic representations of the bicycle of figure 2 in use;
Figure 7 is a schematic representation of rear axle paths related to the bicycle is shown in figures 1 and 2; and
Figure 8 is a close-up view of a portion of figure 2.

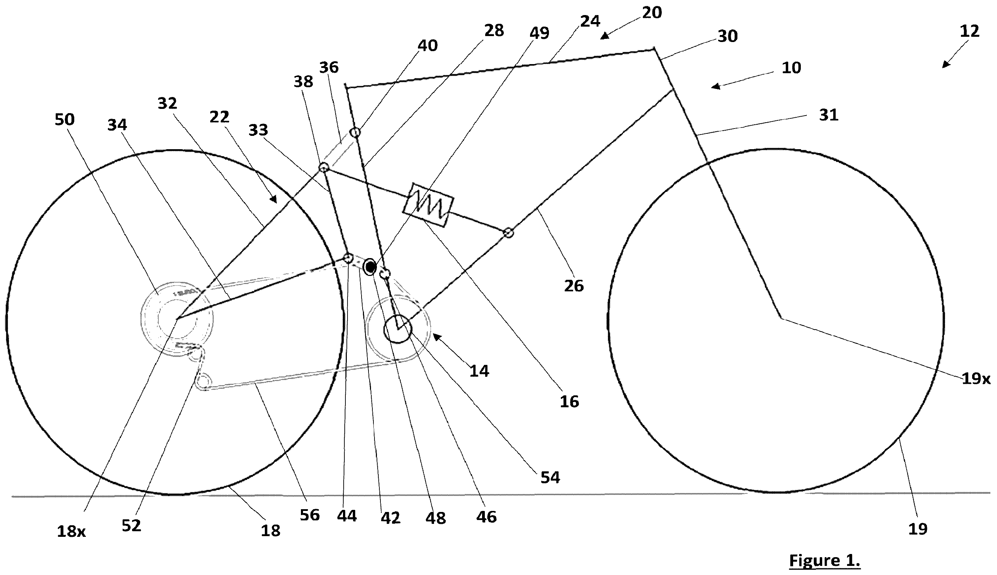

Referring initially to figures 1, a frame 10 forms part of a bicycle 12 which also has a drivetrain 14, a shock absorber 16 (forming part of a suspension system) and a pair of wheels, a rear wheel 18 and front wheel 19. The frame 10 comprises a main frame portion 20 and a rear frame portion 22. The main frame portion 20 is formed from a series of four tubes, a top tube 24, down tube 26, seat tube 28 and head tube 30. The main frame portion 20 forms a four-sided polygon when the four bars are connected. The head tube 30 is located at the front of the bike connecting the handlebars (not shown) and the fork 31. Connected to one end of the head tube, adjacent the handlebars, is one end of the top tube 24. At the other end adjacent the fork 31 is one end of the down tube 26. These tubes form the top (adjacent handlebars and seat (not shown) and bottom (adjacent fork and ground) of the main frame portion 20. Towards the back of the bike (with respect to the standard direction of travel) adjacent the rear wheel 18 is the seat tube 28, which is connected to the top and down tubes, 24 and 26 respectively.

The rear frame portion 22 is located behind the seat tube and forms a triangle. The sides of the triangle are formed from a seat stay 32 (the longest side running from adjacent the seat to adjacent the axle of rear wheel 18) a beam 33 (which is next to the seat tube 28) and a chain stay 34 which is closest to the ground.

Located between the main frame portion 20 and the rear portion 22 are a pair of linkages. The first linkage 36 is pivotably connect to the rear frame portion 22, specifically on the beam 33, at a first location 38, and pivotably connected to the main frame portion 20, specifically on the seat tube 28, at a second location 40. The two locations being at opposing ends of the first linkage.

The second linkage 42 is pivotably connected to the rear frame portion 22, specifically at the chain stay 34, at a third location 44 and to the main frame portion 20, specifically at seat tube 28, at a fourth location 46. These locations are also found at opposing ends of the second linkage. This second linkage 42 is located below the first linkage 36. That is when the bike 12 is in standard use, with the wheels 18 and 19 in contact with the ground, the first linkage 36 is above the second linkage 42 being located closer to the top tube 24. The second linkage 42 is located closer to the drivetrain 14 and closer to the ground.

The second linkage 42 also includes a mounting 48. This mounting is used to mount a component of the drivetrain 14, for example the idler or the bottom bracket. In figure 1 this mounting feature 48 is an idler mount with an idler cog 49 inserted. Examples of the mounting feature 48 include one or more aperture formed in the second linkage 42. Where multiple apertures are provided this allows the position of the idler 49 to be varied dependent on the requirements of the rider. Mounting the idler 49 closer to the third location 44 results in more movement of the idler during compression of the suspension which increases the chain line length more than if the idler is located closer to the fourth location 46.

In the embodiment shown in figure 1, a shock absorber mount, for mounting one end of the shock absorber 16 is also connected to the first linkage 36 at the first location 38. The other end of the shock absorber 16 being connected to the down tube 26. At this location the shock absorber is used for cushioning movement between the rear frame portion 22 and the main frame portion 20.

Mounted to both the rear frame portion 22 and the main frame portion 20 is the drivetrain 14. The drive train includes a rear cog-set (or cassette) 50 and rear derailleur 52 both located at or adjacent the axle 18x of rear wheel 18 at the junction of the seat stay 32 and chain stay 34. In figure 1 located at the connection point between the down tube 26 and the seat tube 28 is the chain ring 54, which is mounted to the bottom bracket in the bottom bracket mounting tube at that location. This is also where the crank arms and pedals (not shown) are situated. A continuous chain 56 follows a path around the cog-set 50, the rear derailleur 52, the chain rings 54 and back to the cog-set 50.

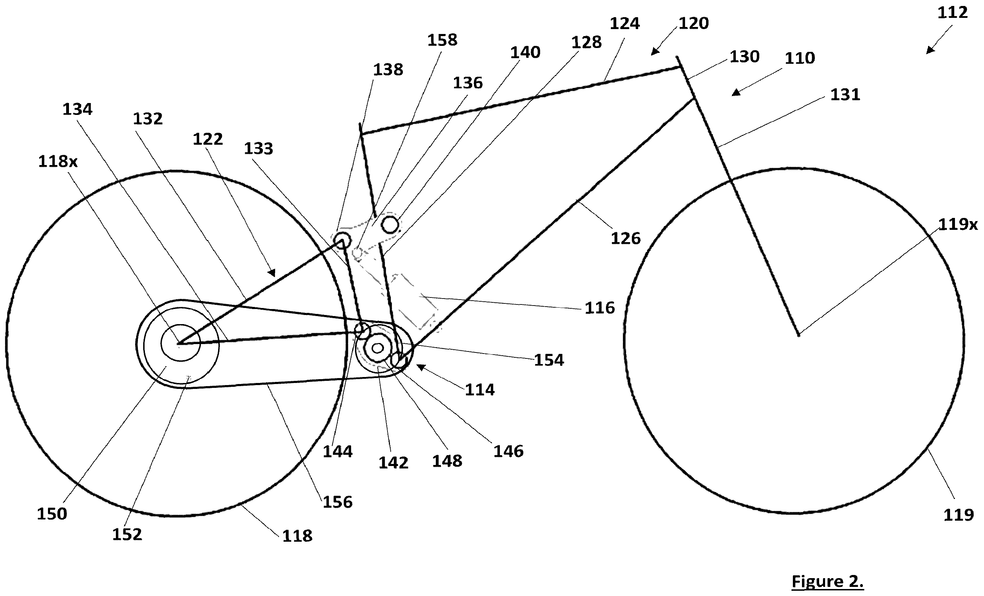

Now referring to figure 2 in which components equivalent to those in figures 1 have been identified with like reference numerals increased by 100, the frame 110 comprises all of the features included in figure 1.

The first linkage 136 has a first and second location, 138 and 140, located at distal ends. The first location is on the seat stay 132 of the rear frame portion 122 and the second location is on the seat tube 128. The first linkage also includes a fifth location 158 providing a mount for one end of the shock absorber 116 with the other end of the shock absorber 116 being connected to the down tube 126.

The main difference between the embodiment shown in figure 2 to that in figure 1 is that instead of mounting an idler 49 on the second linkage 42, the component of the drivetrain 14 that is mounted on the second linkage 142 is the bottom bracket which is therefore located in the bottom bracket mounting 148.

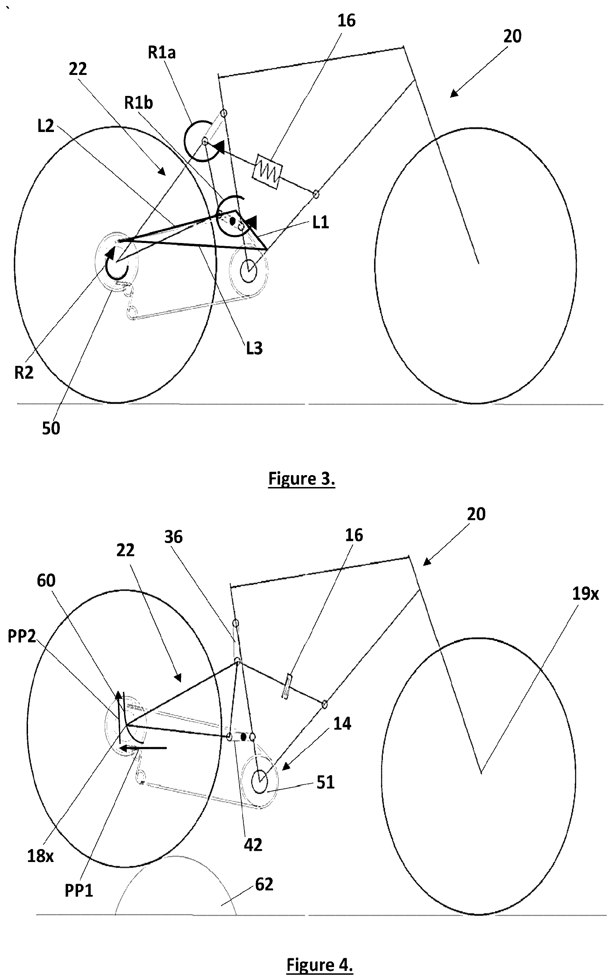

Referring now to figures 3 and 4, the bicycle 12 is travelling over a flat surface with the shock absorber 16 in an extended condition. During this condition, the rear axle 18x can be described as being situated at the start of the rear axle path, indicated by the position of the rear axle 18x on the axle path 60.

When the bicycle encounters a bump 62 (figure 4) the suspension begins to compress. During the first part of the suspension compression the first linkage 36 begins to pivot in a first rotational direction R1a, being an anti-clockwise direction, at the connection point between the first linkage and the main frame portion, at the second location 40. The second linkage 42 also pivots in a rotational direction R1b, that being, in common with R1a, an anti-clockwise direction, at the connection between the second linkage and the main frame portion, at the fourth location. At the same time the rear frame portion 22 moves in a second rotational direction R2, being opposite to R1a and R1b that is in a clockwise direction. As a result, the motion R1a and R1b of the linkages 36 and 42 are counter rotating relative to the motion R2 of the rear frame portion 22.

It should be noted that some of the rotation of the linkages may reverse at the extreme ends of their movement. For example, as the rear frame portion 22 rotates in a clockwise direction the linkages 36 and 42 initially, and through the majority of their movement, rotate in an anti-clockwise direction as described above. However, there comes a position where the first (upper) linkage 36 becomes aligned with the beam 33 that forms the portion of the rear frame portion closest to the seat tube 28. That is, the linkage 36 and beam 33 are in a straight line. Any further movement of linkage 36 in the anti-clockwise direction pulls the beam 33 slightly upwards in turn causing the second (lower) linkage 42 to briefly and slightly begin to rotate in a clockwise direction. It is therefore the case that rotation of the rear frame portion 22 in a first rotational direction relative to the main frame portion 20 results in rotation of the first and second linkages 36 and 42 that is primarily in a second rotational direction opposite to the first direction and the rotation of the first and second linkages is not exclusively in the second rotational direction. In this instance the preferred movement of the idler under pedalling load in the initial part of the suspension travel is still achieved. However, if the linkage 36 and beam 33 do not pass the point of being aligned then the rotation of the first and second linkages is exclusively in the second rotational direction.

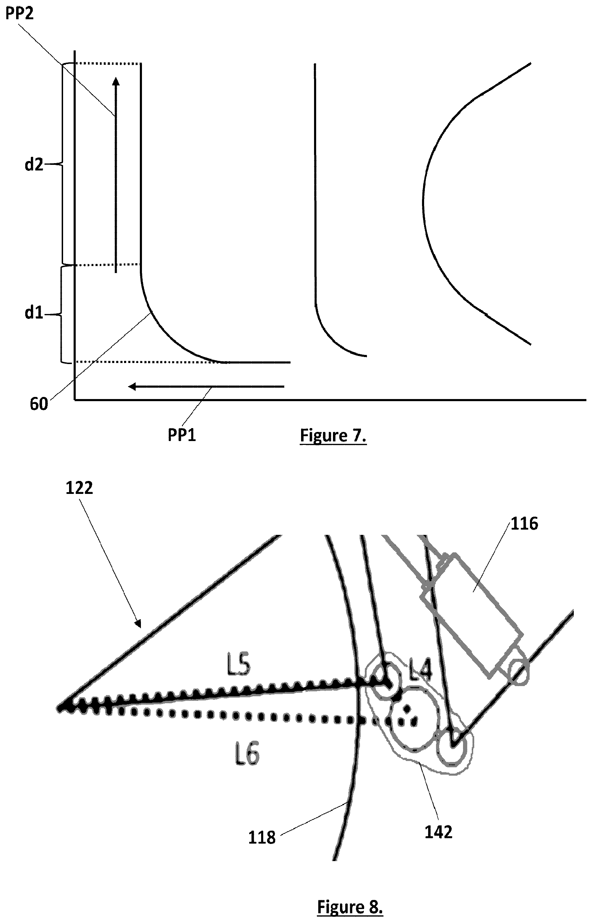

This motion initially drives the rear wheel backwards, increasing the distance between the rear axle 18x and bottom bracket 51. With additional reference to figure 7, this rearward action is represented by d1 on the rear axle path 60, with the motion indicated by the arrows PP1 and PP2. This initial rearward movement in the axle path 60 gives the rear wheel 18 more time to climb the face of the bump 62. Chain growth is the increase in the length of the chain line which is measured from the points at which the chain contacts the top of the front chain ring 54 and the top of the rear cog-set 50 in the drivetrain 14. Because the front chain ring 54 is attached to the main frame portion (via the bottom bracket) and the rear cog-set 50 is attached to the rear frame portion 22, the distance between the front and rear cogs changes as the suspension moves the rear wheel backwards during the early part of the axle path 60. However, the presence of the idler 49 creates a triangle with two sides of the triangle being between the front chain ring 54 and the idler 49 (labelled L1) and between the idler and the rear cog set 50 (labelled L2). The third side of this imaginary triangle is the chain line as it would be in the absence of the idler 49, that is extending from the front chain ring 54 to the rear cog set 50 (labelled L3). The position of the idler 49 on the second linkage 42 determines the extent to which the length of the chain line is altered by the movement of the rear wheel 19 away from the main frame portion 20 and the front chain ring 54.

If the idler 49 is located on or close to the fourth location 46, where the second linkage 42 is attached to the main frame portion 20, then the idler 49 is less able to influence chain line length as L1 remains substantially the same through the whole of the movement of the suspension. This is in part because the idler is located very close of the front chain ring 54 and because the anticlockwise movement of the second linkage about the fourth location 46 results in very little movement of the idler 49. However, the length L2 extends in a similar way to the way L3 would in the absence of an idler 49 because the rearward movement of the rear axle 18x results in movement of the rear cog-set away from the fourth location. As a result of the minimal movement of the idler, the impact of the increasing length of the chain line (chain growth) is not significantly compensated for by the idler. This location for the idler 49 is most beneficial in reducing pedal bob (extending the suspension during pedalling) because chain growth is useful in counteracting this problem. However, it is least effective in reducing pedal kickback where the sudden chain growth resulting from compression of the suspension passes that force into the pedals risking throwing the rider off balance. As a result, idler locations closer to the fourth location 46 will maximise pedalling responsiveness which is preferable for bikes intended to be ridden uphill or for full-suspension bikes where pedalling importance is the primary concern.

In contrast, if the idler 49 is located on or close to the third location 44, where the second linkage 42 is attached to the rear frame portion 22, then the idler 49 has significant impact on the chain line length as the idler moves when the suspension compresses. In particular, if the second linkage 42 is long enough the idler 49 is able to swing through a sufficiently large arc so that the idler moves to a position where it is not forming the sides L1 and L2 and the chain is extending substantially along the line L3 as through the idler were not present. This location of the idler 49 is most beneficial in reducing pedal kickback because there is little or no increase in the chain line length as the two sides of the triangle L1 and L2 flatten out during compression of the suspension. However, this location is the least effective at reducing pedal bob. As a result, this location or idler locations close to the third location 44 are preferable for bikes primarily designed to travel downhill using the suspension and are used less for pedalling uphill, for example, downhill mountain bikes.

If the idler 49 is located on the second linkage 42 between the third location 44 and the fourth location 46 then a compromise between the extreme positions set out above is provided. Furthermore, ideally the mounting 48 for the idler 49 can be changed allowing a rider to set up their mountain bike for the type of terrain they are expecting to encounter during that ride. This can be achieved by having an idler axle mounted in one of a series of apertures formed in the second linkage or by having an idler mounting which can be slid along the second linkage and fixed into a desired position.

As the rear wheel continues to ascend over the bump the suspension enters into the second part of compression. During this second phase the rear wheel axle begins to move in a more vertical direction compared to the rearward movement during the first phase on compression. This occurs due to combined effect of the two linkages meaning that the rear suspension portion is not pivoting around a single point but instead has a virtual pivot point which moves during the compression of the suspension. This motion is represented in figure 7 in the second part of the rear axle path, d2 and corresponding arrows. This motion prevents the bicycle from becoming too long and maintains preferable handling characteristics.

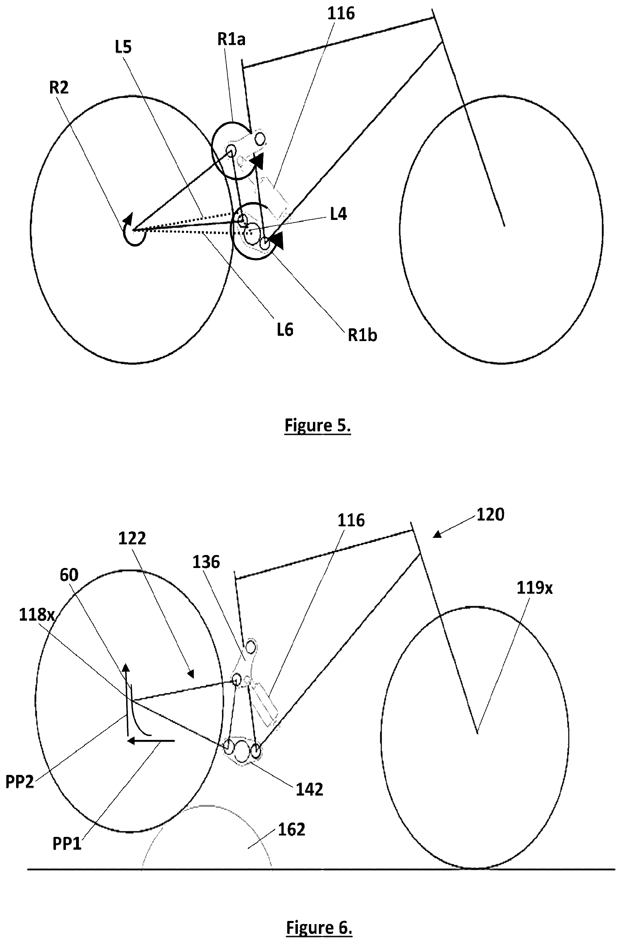

Figures 5 and 6 show the action of the second embodiment of the present invention illustrated in figure 2. In this embodiment the portion of the drivetrain 114 which is mounted on the second linkage 142 is the bottom bracket bottom bracket mounting 148 and there is no idler (49 in the first embodiment) on the second linkage. As a result, it is the position of the bottom bracket mounting on the second linkage which determines the impact of these mounting positions on the drivetrain. In this example the triangle formed from the sides L4, L5 and L6 does not represent positions of the chain but are instead a triangle formed between the centre of the bottom bracket mounting 148, the third location 144 and the rear axle 118x. The line L6 is somewhat equivalent to the chain line length (distance between the contact point for the chain on the rear cog set 150 and the contact point for the chain on the front ring 154) when the suspension is not in use. When the suspension is activated as the rear wheel 118 goes over a bump the anticlockwise motion of the second linkage 142 causes the third location 144 to move downwards towards the line L6. As a result, the chain line length increases to the point where it is equivalent to L4 plus L5.

The choice of the position of the bottom bracket mounting 148 on the second linkage 142 impacts the amount of chain line length increase as follows. The closer the bottom bracket mounting 148 is to the third location 144 the smaller the amount of chain line length increase during the activation of the suspension. Less chain line length increase is better for reducing pedal kickback but assists less in overcoming pedal bob. As a result, this position for the bottom bracket mounting 148 is preferable where the suspension is going to be used significantly and pedalling is minimised such as downhill mountain biking.

In contrast, the closer the bottom bracket mounting 148 is to the fourth location 146 the longer the length of the triangle L4 and therefore the greater the chain line length increase during the suspension stroke. More chain line length increase is better for reducing pedal bob but risks increasing pedal kickback. As a **result,** this position for the bottom bracket mounting 148 is preferable where pedalling performance is more important.

It will be appreciated by persons skilled in the art that the above embodiments have been described by way of example only and not in any limitative sense, and that various alterations and modifications are possible without departure from the scope of the protection which is defined by the appended claims. For example, the rear frame portion is illustrated as a right-angled triangle however, the rear frame portion could also be a non-right-angled triangle (oblique triangle). In both the examples illustrated above the shock absorber is mounted on the first linkage at or close to the first location 38 and 138 at one end and mounted on the down tube 26 and 126 at the other end. These are provided merely as examples of a suitable shock absorber mounting location and many alternative arrangements for the shock absorber will also prove effective, including, but not limited to, the shock absorber being mounted directly between the front and rear parts of the frame, or where an arrangement of connecting struts and additional linkages could be used to situate the shock absorber in a plurality of positions. Furthermore, the shock absorber could be mounted to portions of the linkages that extend beyond the points at which the linkages mount to the frame. It should also be noted that the present invention is suitable for both standard pedal bikes, particularly mountain bikes, but is also suitable for electrically assisted bicycles commonly known as E-bikes.

## Claims

1. A frame (10) for a bicycle (12), the bicycle including said frame, a drivetrain (14) and a plurality of wheels (18,19), the frame comprising:
a main frame portion (20);
a rear frame portion (22) for receiving a rear wheel (19);
a first linkage (36) pivotably connected at a first location (38) to said rear frame portion (22) and pivotably connected at a second location (40), distal of said first location, to said main frame portion;
a second linkage (42) pivotably connected at a third location (44) to said rear frame portion and pivotably connected at a fourth location (46), distal of said third location, to said main frame portion; and
a plurality of shock absorber mounts for mounting a shock absorber (116) for cushioning movement between said rear frame portion and said main frame portion,
wherein, rotation of said rear frame portion in a first rotational direction relative to said main frame portion results in rotation of said first and second linkages in a second rotational direction relative to said main frame portion, said second rotational direction being opposite to said first rotational direction; and
**characterized in that** said second linkage comprises at least one mounting for at least one component of the drivetrain of a bicycle.

2. A frame for a bicycle according claim 1, wherein said mounting further comprises at least one idler mounting (48) for receiving an idler (49).

3. A frame for a bicycle according claim according to claim 2, wherein said idler mounting (48) is moveable.

4. A frame according to claims 2 or 3 wherein, said idler mounting (48) further comprises at least one aperture for receiving an axle of said idler (49).

5. A frame for a bicycle according to any preceding claim wherein said second linkage (42) is located below said first linkage (36).

6. A frame for a bicycle according to claim 5, wherein said mounting (48) further comprises an aperture for receiving a bottom bracket.

7. A frame for a bicycle according to any preceding claim wherein said first and second location (38, 40) are at opposing ends of said first linkage (36).

8. A frame for a bicycle according to any preceding claim, wherein said third and fourth location (44, 46) are at opposing ends of said second linkage (42).

9. A frame according to any preceding claim wherein, said mounting (48) allows said drivetrain (14) component to be mounted to said second linkage (42) at a plurality of locations.

10. A frame for a bicycle according to any preceding claim, wherein said mounting (48) further comprises multiple mountings.

11. A frame for a bicycle according to any preceding claim, wherein one shock absorber mount is located at said first location and another shock absorber mount is located on main frame mount.

12. A frame for a bicycle according to any of claims 7 to 10, one shock absorber mount is located at a fifth location (158) and another shock absorber mount is located on said main frame mount wherein, said fifth location is on said first linkage (136) distal of said first location (138).

13. A frame for a bicycle according to any preceding claim, wherein said rotation of said first and second linkages (36, 42) is exclusively in said second rotational direction.

14. A bicycle comprising:
a frame (10) according to any preceding claim;
a shock absorber (16);
a pair of wheels (18, 19); and
a drivetrain (14).

15. A bicycle according to claim 14 wherein said drivetrain (14) further comprises a plurality of gears.

## Patentansprüche

1. Rahmen (10) für ein Fahrrad (12), wobei das Fahrrad den Rahmen, eine Schaltung (14) und eine Vielzahl von Rädern (18, 19) einschließt, wobei der Rahmen umfasst:
einen Hauptrahmenteil (20);
einen hinteren Rahmenteil (22) zum Aufnehmen eines Hinterrads (19);
eine erste Verkettung (36), die an einer ersten Stelle (38) schwenkbar mit dem hinteren Rahmenteil (22) verbunden ist und an einer zweiten Stelle (40), entfernt von der ersten Stelle, schwenkbar mit dem Hauptrahmenteil verbunden ist;
eine zweite Verkettung (42), die an einer dritten Stelle (44) schwenkbar mit dem hinteren Rahmenteil verbunden ist und an einer vierten Stelle (46), entfernt von der dritten Stelle, schwenkbar mit dem Hauptrahmenteil verbunden ist; und
eine Vielzahl von Stoßdämpferhalterungen zum Montieren eines Stoßdämpfers (116) zum Abpolstern einer Bewegung zwischen dem hinteren Rahmenteil und dem Hauptrahmenteil,
wobei eine Drehung des hinteren Rahmenteils in einer ersten Drehrichtung in Bezug auf den Hauptrahmenteil zu einer Drehung der ersten und der zweiten Verkettung in einer zweiten Drehrichtung in Bezug auf den Hauptrahmenteil führt, wobei die zweite Drehrichtung entgegengesetzt zu der ersten Drehrichtung ist; und
**dadurch gekennzeichnet, dass** die zweite Verkettung mindestens eine Einfassung für mindestens eine Komponente der Schaltung eines Fahrrads umfasst.

2. Rahmen für ein Fahrrad nach Anspruch 1, wobei die Einfassung ferner mindestens eine Laufradeinfassung (48) zum Aufnehmen eines Laufrads (49) umfasst.

3. Rahmen für ein Fahrrad nach Anspruch 2, wobei die Laufradeinfassung (48) bewegbar ist.

4. Rahmen nach den Ansprüchen 2 oder 3, wobei die Laufradeinfassung (48) ferner mindestens eine Öffnung zum Aufnehmen einer Achse des Laufrads (49) umfasst.

5. Rahmen für ein Fahrrad nach einem vorhergehenden Anspruch, wobei sich die zweite Verkettung (42) unter der ersten Verkettung (36) befindet.

6. Rahmen für ein Fahrrad nach Anspruch 5, wobei die Einfassung (48) ferner eine Öffnung zum Aufnehmen eines Tretlagers umfasst.

7. Rahmen für ein Fahrrad nach einem vorhergehenden Anspruch, wobei sich die erste und die zweite Stelle (38, 40) an entgegengesetzten Enden der ersten Verkettung (36) befinden.

8. Rahmen für ein Fahrrad nach einem vorhergehenden Anspruch, wobei sich die dritte und die vierte Stelle (44, 46) an entgegengesetzten Enden der zweiten Verkettung (42) befinden.

9. Rahmen für ein Fahrrad nach einem vorhergehenden Anspruch, wobei die Einfassung (48) ermöglicht, dass die Komponente der Schaltung (14) an einer Vielzahl von Stellen an der zweiten Verkettung (42) montiert wird.

10. Rahmen für ein Fahrrad nach einem vorhergehenden Anspruch, wobei die Einfassung (48) ferner mehrere Einfassungen umfasst.

11. Rahmen für ein Fahrrad nach einem vorhergehenden Anspruch, wobei sich eine Stoßdämpferhalterung an der ersten Stelle befindet und sich eine andere Stoßdämpferhalterung an einer Hauptrahmenhalterung befindet.

12. Rahmen für ein Fahrrad nach einem der Ansprüche 7 bis 10, wobei sich eine Stoßdämpferhalterung an einer fünften Stelle (158) befindet und sich eine andere Stoßdämpferhalterung an der Hauptrahmenhalterung befindet, wobei die fünfte Stelle an der ersten Verkettung (136) entfernt von der ersten Stelle (138) ist.

13. Rahmen für ein Fahrrad nach einem vorhergehenden Anspruch, wobei die Drehung der ersten und der zweiten Verkettung (36, 42) ausschließlich in der zweiten Drehrichtung ist.

14. Fahrrad, umfassend:
einen Rahmen (10) nach einem vorhergehenden Anspruch;
einen Stoßdämpfer (16);
ein Paar Räder (18, 19) und
eine Schaltung (14).

15. Fahrrad nach Anspruch 14, wobei die Schaltung (14) ferner eine Vielzahl von Zahnrädern umfasst.

## Revendications

1. Un cadre (10) pour un vélo (12), le vélo incluant ledit cadre, une transmission (14) et une pluralité de roues (18, 19), le cadre comprenant :
une partie cadre principal (20) ;
une partie cadre arrière (22) pour recevoir une roue arrière (19) ;
une première tringlerie (36) reliée de manière pivotante à un premier emplacement (38) sur ladite partie cadre arrière (22) et reliée de manière pivotante à un deuxième emplacement (40), distal dudit premier emplacement, sur ladite partie cadre principal ;
une deuxième tringlerie (42) reliée de manière pivotante à un troisième emplacement (44) sur ladite partie cadre arrière et reliée de manière pivotante à un quatrième emplacement (46), distal dudit troisième emplacement, sur ladite partie cadre principal ; et
une pluralité de supports d'amortisseur pour monter un amortisseur (116) pour amortir le déplacement entre ladite partie cadre arrière et ladite partie cadre principal,
dans lequel, la rotation de ladite partie cadre arrière dans une première direction de rotation par rapport à ladite partie cadre principal se traduit par la rotation desdites première et deuxième tringleries dans une deuxième direction de rotation par rapport à ladite partie cadre principal, ladite deuxième direction de rotation étant opposée à ladite première direction de rotation ; et
**caractérisé en ce que** ladite deuxième tringlerie comprend un ou plusieurs dispositifs de fixation pour un ou plusieurs composants de la transmission d'un vélo.

2. Un cadre pour un vélo selon la revendication 1, dans lequel ledit dispositif de fixation comprend en outre un ou plusieurs dispositifs de fixation de galet tendeur (48) pour recevoir un galet tendeur (49).

3. Un cadre pour un vélo selon la revendication 2, dans lequel ledit dispositif de fixation de galet tendeur (48) est mobile.

4. Un cadre selon la revendication 2 ou 3, dans lequel, ledit dispositif de fixation de galet tendeur ( 48) comprend en outre une ou plusieurs ouvertures pour recevoir un axe dudit galet tendeur (49).

5. Un cadre pour un vélo selon l'une quelconque des revendications précédentes, dans lequel ladite deuxième tringlerie ( 42) est située au-dessous de ladite première tringlerie ( 36)

6. Un cadre pour un vélo selon la revendication 5, dans lequel ledit dispositif de fixation ( 4 8) comprend en outre une ouverture pour recevoir un boîtier de pédalier.

7. Un cadre pour un vélo selon l'une quelconque des revendications précédentes, dans lequel lesdits premier et deuxième emplacements (38, 40) sont à des extrémités opposées de ladite première tringlerie (36).

8. Un cadre pour un vélo selon l'une quelconque des revendications précédentes, dans lequel lesdits troisième et quatrième emplacements (44, 46) sont à des extrémités opposées de ladite deuxième tringlerie (42).

9. Un cadre selon l'une quelconque des revendications précédentes, dans lequel, ledit dispositif de fixation (48) permet au composant de ladite transmission (14) d'être fixé à ladite deuxième tringlerie (42) à une pluralité d'emplacements.

10. Un cadre pour un vélo selon l'une quelconque des revendications précédentes, dans lequel ledit dispositif de fixation (48) comprend en outre plusieurs dispositifs de fixation.

11. Un cadre pour un vélo selon l'une quelconque des revendications précédentes, dans lequel un support d'amortisseur est situé audit premier emplacement et un autre support d'amortisseur est situé sur un support de cadre principal.

12. Un cadre pour un vélo selon l'une quelconque des revendications 7 à 10, dans lequel un support d'amortisseur est situé à un cinquième emplacement (158) et un autre support d'amortisseur est situé sur ledit support de cadre principal dans lequel, ledit cinquième emplacement est sur ladite première tringlerie (136), distal dudit premier emplacement (138).

13. Un cadre pour un vélo selon l'une quelconque des revendications précédentes, dans lequel ladite rotation desdites première et deuxième tringleries (36, 42) est exclusivement dans ladite deuxième direction de rotation.

14. Un vélo comprenant :
un cadre (10) selon l'une quelconque des revendications précédentes ;
un amortisseur (16) ;
une paire de roues (18, 19) ; et
une transmission (14) ;

15. Un vélo selon la revendication 14, dans lequel ladite transmission (14) comprend en outre une pluralité d'engrenages.
